# EUROPEAN PATENT APPLICATION

(11) **EP 4 039 505 A2**
(43) Date of publication of application: **10.08.2022**
(21) Application number: 21212379.8
(22) Date of filing: 03.12.2021
(51) Int. Cl.: B60C 7/12, B60B 25/10, B60C 7/24

(54) **NON-PNEUMATIC TIRE ASSEMBLY**

(30) Priority: 16.12.2020 US 202063126248 P; 28.10.2021 US 202117452671
(71) Applicant: The Goodyear Tire & Rubber Company, Akron, OH 44316 (US)
(72) Inventor: DOWNING, Daniel Ray, Uniontown, 44685 (US); YENSHO, Nate Edward, Akron, 44321 (US); KMIECIK, Frank Anthony, Akron, 44313 (US); SKURICH, Michael Stefan, Canton, 44718 (US)
(74) Representative: Goodyear IP Law

(57) **Abstract**

A non-pneumatic tire assembly is disclosed comprising a wheel (50) having a first and second bead ring (900); and a non-pneumatic tire (100) having a crown region (200) and a first and second sidewall region (400). The first and second sidewall regions (400) each extend from the crown region (200) and terminate into a first and second bead area (420). The first and second bead area (420) are each mounted on the respective first and second bead ring (900). Each bead area (420) is located axially outward of the crown region (200) of the non-pneumatic tire (100) when mounted on the wheel (50). The non-pneumatic tire (100) further includes a ply (500) which extends from the first bead area (420) to the second bead area (420). Also, a non-pneumatic tire assembly is disclosed comprising a rim having a first and second rim flange; and a non-pneumatic tire (100) having a crown region (200) and a first and second sidewall regions (400). The first and second sidewall regions (400) each extend from the crown (200) and terminate into a first and second bead area (420). The first and second bead area (420) are each mounted on the first and second rim flange. Each sidewall portion (400) is preloaded in tension when mounted on the rim. The non-pneumatic tire (100) further includes a ply (500), preferably a ply (500) comprising a plurality of parallel reinforcement cords, which extends from the first bead area (420) to the second bead area (420).

## Description

### Field of the Invention

The present invention relates generally to vehicle tires, and more particularly, to a non-pneumatic tire assembly comprising a non-pneumatic tire and a rim or wheel respectively.

### Background of the Invention

The pneumatic tire has been the solution of choice for vehicular mobility for over a century. The pneumatic tire is a tensile structure. The pneumatic tire has at least four characteristics that make the pneumatic tire so dominate today. Pneumatic tires are efficient at carrying loads because all of the tire structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

Thus, an improved non pneumatic tire is desired that has all the features of the pneumatic tires without the drawback of the need for air inflation is desired, and is preferably a "top loader."

### Summary of the Invention

The invention relates to a non-pneumatic tire assembly in accordance with claim 1, 12 or 15 respectively. The assembly comprises a non-pneumatic tire and a rim or wheel respectively.

Dependent claims refer to preferred embodiments of the invention.

The invention provides in a first preferred aspect a non-pneumatic tire and rim assembly comprising a rim having a first and second rim flange, a non-pneumatic tire having a crown region and a first and second sidewall region; wherein the first and second sidewall regions each extend from the crown and terminate into a first and second respective bead area, wherein the first and second bead area are each mounted on the first and second rim flange, respectively; wherein each bead area is located axially outward of the crown region of the non-pneumatic tire when mounted on the rim, and wherein the non-pneumatic tire further includes a reinforcement ply which extends from the first bead area to the second bead area.

The invention provides in a second preferred aspect a non-pneumatic tire assembly comprising a wheel having a first and second bead ring and a non-pneumatic tire having a crown region and a first and second sidewall region. The first and second sidewall regions each extend from the crown region and terminate into a first and second bead area. The first and second bead area are each mounted on the respective first and second bead ring. Each bead area is located axially outward of the crown region of the non-pneumatic tire when mounted on the wheel. The non-pneumatic tire further includes a ply which extends from the first bead area to the second bead area.

The invention provides in a third preferred aspect a non-pneumatic tire assembly comprising a rim having a first and second rim flange and a non-pneumatic tire having a crown region and a first and second sidewall region. The first and second sidewall regions each extend from the crown and terminate into a first and second bead area. The first and second bead area are each mounted on the first and second rim flange. Each bead area is located axially outward of the shoulder region of the non-pneumatic tire when mounted on the rim.

The invention provides in a fourth preferred aspect a non-pneumatic tire assembly comprising a wheel having a first and second bead ring and a non-pneumatic tire having a crown region and a first and second sidewall region. The first and second sidewall regions each extend from the crown region and terminate into a first and second bead area. The first and second bead area are each mounted on the respective first and second bead ring. Each bead area is located axially outward of the crown region of the non-pneumatic tire when mounted on the wheel. The non-pneumatic tire further includes a ply which extends from the first bead area to the second bead area.

### Brief Description of the Drawings

The present invention will be better understood through reference to the following description and the appended drawings, in which:
FIG. 1 is a perspective view of a first embodiment of a non-pneumatic tire mounted on a wheel or rim in accordance with the present invention;
FIG. 2 is a close-up perspective view of the non-pneumatic tire assembly of FIG. 1;
FIG. 3 is a cross-sectional view of the non-pneumatic tire assembly of FIG. 1;
FIG. 4 is a closeup cross-sectional view of a portion of the belt package of the non-pneumatic tire assembly of FIG. 1;
FIG. 5 is a cross-sectional view of the non-pneumatic tire mounted on a wheel or rim in accordance with the present invention;

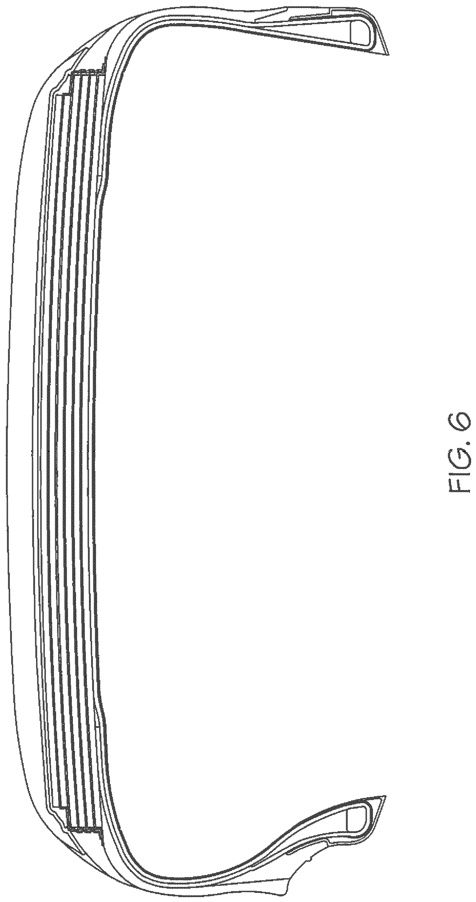

FIG. 6 is a cross-sectional view of a non-pneumatic tire, with the left-hand sidewall showing a conventional sidewall profile, and the right-hand sidewall having a sidewall profile in accordance with the present invention;
FIG. 7 is a cross-sectional view of the non-pneumatic when unmounted, and shown in phantom in a mounted condition, in accordance with of the invention;
FIG. 8A is a cross-sectional view showing the non-pneumatic tire before mounting on the wheel or rim, in accordance with the invention;
FIG. 8B is a cross-sectional view showing the non-pneumatic tire tire after mounting on the wheel or rim after the wheel or rim has axially expanded, in accordance with the present invention;
FIG. 8C illustrates a cross-sectional view of a modular split rim or wheel assembly and the non-pneumatic tire mounted on a vehicle hub;
FIG. 9A illustrates a chart of force vs deflection and FIG. 9B illustrates a footprint;
FIG. 10A illustrates a chart of force vs deflection for a standard pneumatic tire at different pressures, and the non-pneumatic tire of the present invention; and FIG. 10B illustrates force vs displacement of the non-pneumatic tire of the present invention in comparison to pneumatic tires at different pressures; and
FIG. 11A illustrates the cord tension from 0 to 360 degrees of the non-pneumatic tire of the present invention, while FIG. 11B illustrates the device used to measure the cord tension.

### Definitions

"Aspect Ratio" means the ratio of a tire's section height to its section width.

"Axial" and "axially" means the lines or directions that are parallel to the axis of rotation of the tire.

"Bead" or "Bead Core" means generally that part of the tire comprising an annular tensile member, the radially inner beads are associated with holding the tire to the rim being wrapped by ply cords and shaped, with or without other reinforcement elements such as flippers, chippers, apexes or fillers, toe guards and chafers.

"Circumferential" means lines or directions extending along the perimeter of the surface of the annular tread or crown perpendicular to the axial direction.

"Cord" means one of the reinforcement strands, including fibers, which are used to reinforce the plies.

"Inextensible" means a cord having a relative elongation at break of less than 0.2% at 10% of the breaking load, when measured from a cord extracted from a cured tire.

"Equatorial Plane" means a plane perpendicular to the axis of rotation of the tire passing through the centerline of the tire.

"Meridian Plane" means a plane parallel to the axis of rotation of the tire and extending radially outward from said axis.

"Ply" means a cord-reinforced layer of elastomer, preferably with radially deployed or parallel cords.

"Radial" and "radially" mean directions radially toward or away from the axis of rotation of the tire.

### Detailed Description of Preferred Embodiments of the Invention

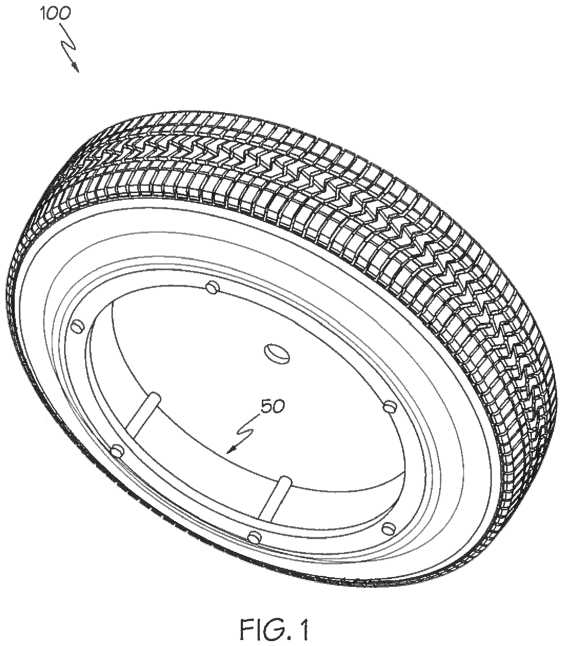

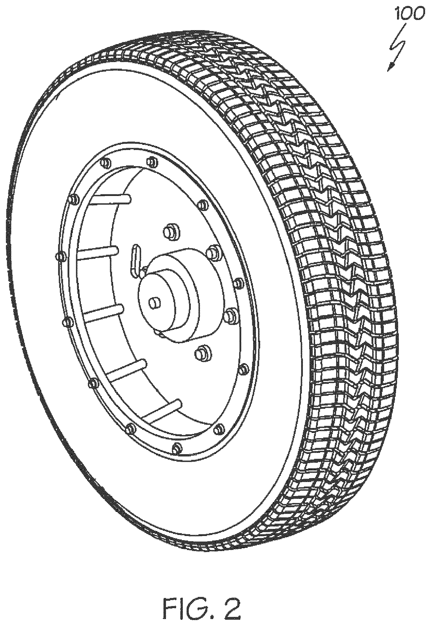

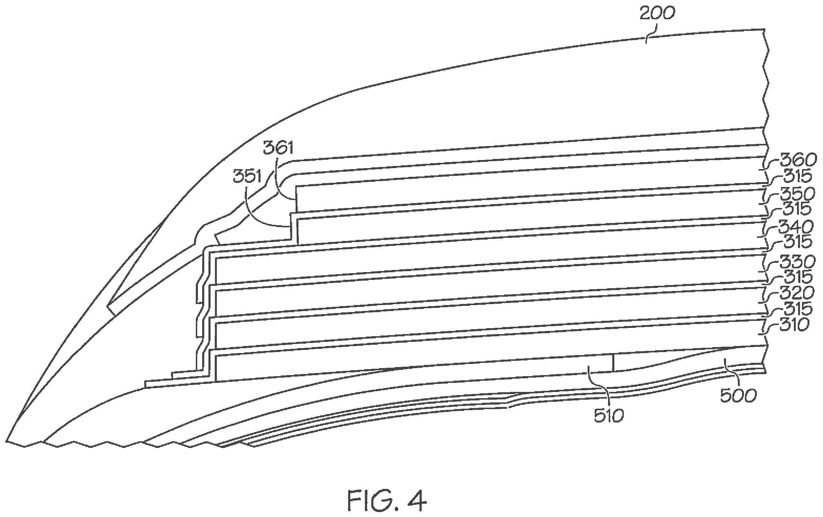

As shown in FIGS. 1-4, a non-pneumatic tire 100 includes a radially outer ground engaging tread or crown 200, which may be a conventional tread as desired, and may include one or more grooves 210, 212, 214, 216 or a plurality of longitudinally oriented tread grooves forming essentially longitudinal tread ribs there between. Ribs may be further divided transversely or longitudinally to form a tread pattern adapted to the usage requirements of the particular vehicle application. Tread grooves may have any depth consistent with the intended use of the tire. The tire tread 200 may include elements such as ribs, blocks, lugs, grooves, and sipes as desired to improve the performance of the tire in various conditions.

The non-pneumatic tire of the present invention preferably further includes a belt package or shear band 300 which is located radially inward of the tread or crown. The belt package or shear band 300 preferably includes at least a first and second reinforced elastomer layer 310, 320. The first and second reinforced elastomer layer 310, 320 is preferably formed of parallel reinforcement cords that may be metal or nonmetal conventional reinforcement cords used in tires. The reinforcement cords are preferably inextensible.

In a first embodiment of a shear band 300, the shear band 300 comprises at least two inextensible reinforcement layers 310, 320 arranged in parallel and separated by a shear matrix 315 of elastomer. Each reinforcement layer 310, 320 may be formed of parallel reinforcement cords embedded in a thin elastomeric coating. The reinforcement cords are preferably inextensible, and may be made of steel, aramid, nylon, polyester, or other inextensible structure. In the first reinforced elastomer layer 310, the reinforcement cords are oriented at an angle in the range of from 0 to +/- 50 degrees relative to the tire equatorial plane, and more preferably in the range of from 0 to +/- 10 degrees. In the second reinforced elastomer layer 320, the reinforcement cords are oriented at an angle in the range of from 0 to +/- 50 degrees relative to the tire equatorial plane, more preferably of from 0 to +/- 10 degrees. Preferably, the angle of reinforcement cords of the first layer is in the opposite direction of the angle of the reinforcement cords in the second layer. As shown, the belt package or shear band 300 may further optionally include additional reinforcement layers 330, 340, 350, 360.

It is additionally preferred that the radially outermost reinforcement layers 350, 360 have outer lateral ends 351, 361 having a reduced axial width as compared to the radially inner reinforcement layers 310, 320, 330, 340.

The shear matrix layer 315 located between the first and second reinforcement layer 310, 320 and is preferably formed of an elastomer material having a shear modulus Gₘ in the range of from 0.5 to 10 MPa, and more preferably in the range of from 4 to 8 MPA. The thickness of the rubber layer 315 may have a radial thickness in the range of from 2.54 mm to 5.08, more preferably 3.8 mm or 3.5 mm to 4.5 mm. If additional reinforcement layers 330, 340, 350, 360 are utilized, the reinforcement layers may also be optionally separated by the shear matrix layer 315.

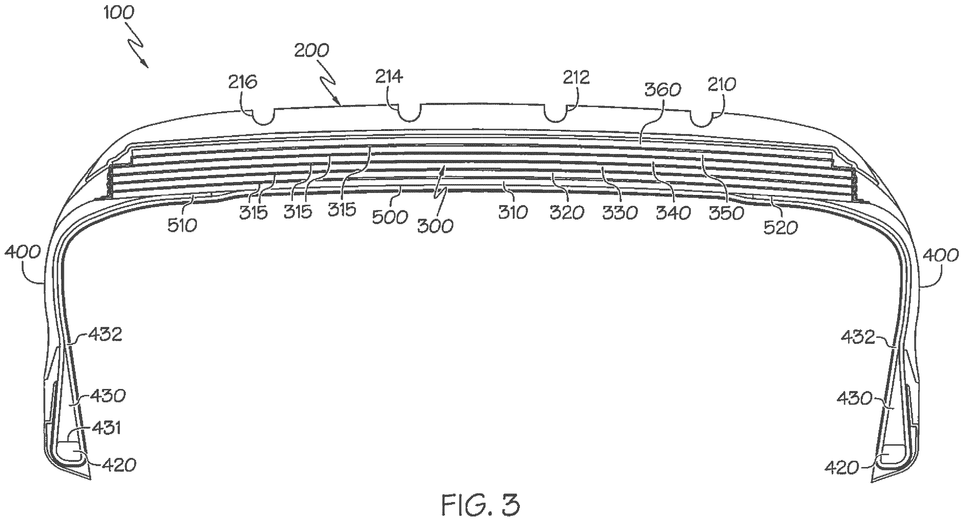

As shown in FIG. 3, the non-pneumatic tire 100 of the present invention further includes two axially spaced apart sidewall portions 400 that extend inward from the tread or crown to a wheel 50 or rim 50. The radially innermost end 410 of each sidewall preferably includes an annular bead 420 which is secured to the wheel/rim 50. The non-pneumatic tire 100 further includes a first layer of ply 500 which extends from the first bead 420 to the second bead 420. Preferably, the ply 500 comprises a reinforced rubber or ply layer formed of parallel reinforcement cords that are nylon, polyester, aramid or formed of a merged cord of nylon, polyester of aramid. Preferably, the reinforcements are oriented in the radial direction. The layer of ply extends radially inward from the tread or crown and is then wrapped around the first bead 420 and has a first end 510 that preferably terminates underneath the shear band 300 forming an envelope ply. A second end 520 of the ply likewise extends down from the tread/crown, is wrapped around the opposite bead 420, and then terminates preferably underneath the shear band forming an envelope ply. Thus, each sidewall preferably has two effective layers of ply. Alternatively, the first and second ends 510, 520 may wrap around the bead and terminate radially outward of a tip 432 of an apex 430.

Each apex 430 is preferably triangular in shape, and has a radial height as measured from its radially inner the first end 431 to its radially outer tip 432. The radial height position of the outer tip 432 is preferably in the range of from 25 percent to 75 percent of the sidewall radial height, and more preferably in the range of from 33 percent to 67 percent of the sidewall radial height.

Each lower sidewall region, which is defined as the lower half of the sidewall, is preferably stiffer relative to the stiffness of the upper half of the sidewall. The lower sidewall may be stiffened by a stiff apex and/or by additional stiff material in the lower sidewall region such as a chafer that is preferably located axially inward of the first apex 430.

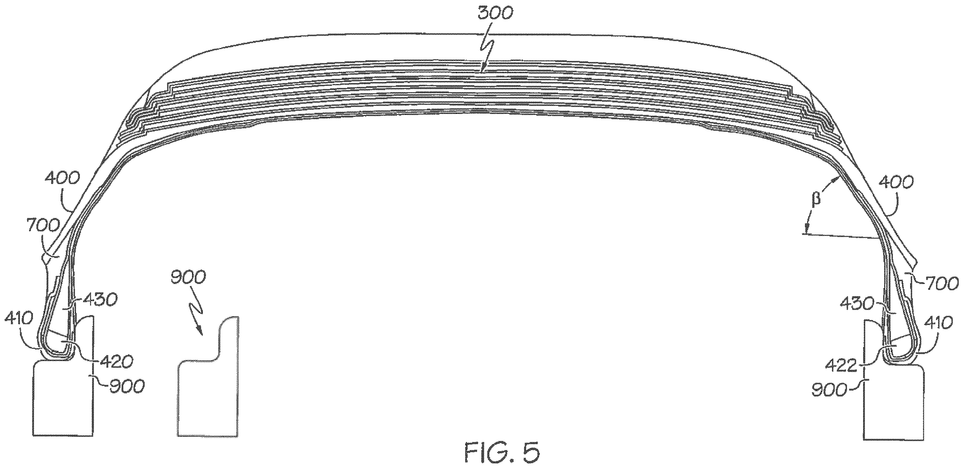

In one embodiment, the lower sidewall is stiffened using a rib stiffener 700 as shown in Fig. 5 located axially outside of and adjacent to the apex 430.

The stiffness may be characterized by the dynamic modulus G', which is sometimes referred to as the "shear storage modulus" or "dynamic modulus". Reference is be made to Science and Technology of Rubber, second edition, 1994, Academic Press, San Diego, Calif., edited by James E. Mark et al, pages 249-254. The shear storage modulus (G') values are indicative of rubber compound stiffness which can relate to tire performance. The tan delta value at 100°C is considered as being indicative of hysteresis, or heat loss.

In a first embodiment, the first apex 430 comprises a stiff rubber composition having a shear storage modulus G' measured at 1% strain and 100°C according to ASTM D5289 ranging from 14 to 43 MPa. In a more preferred embodiment, the first apex 430 comprises a rubber composition having a shear storage modulus G' measured at 1% strain and 100°C according to ASTM D5289 ranging from 23 to 43 MPa.

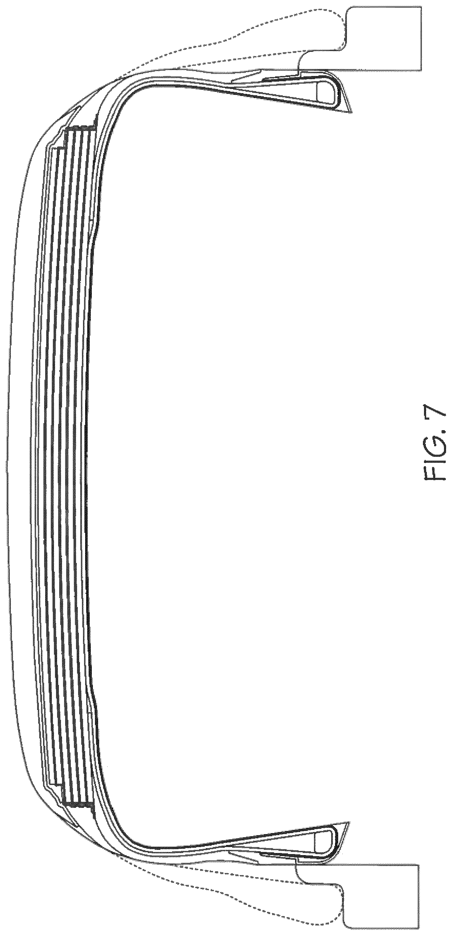

The stiffened lower sidewall ensures that the ply is in tension after being mounted on the wheel or rim, and also during use. When the ply and sidewall of the tire is in the relaxed state as shown in FIG. 7, the plyline is curved so that the beads are located axially inward of the shoulders of the tire. When the beads are loaded onto the rim or wheel, the curve is straightened and the bead or lower sidewall of the tire is located axially outward of the tire shoulders, so that the ply acts as a spring.

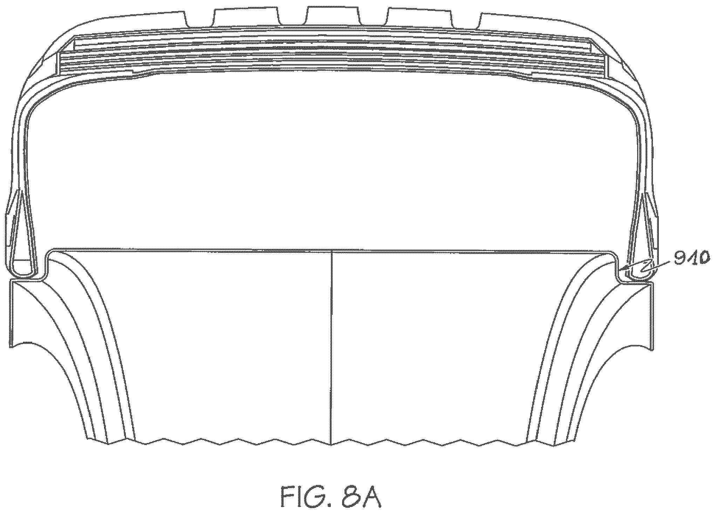

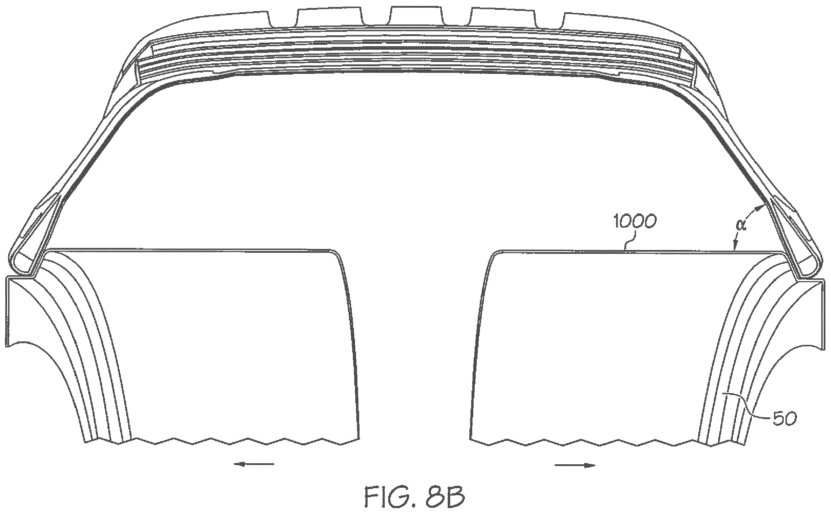

FIG. 7 illustrates the tire mounted on the wheel or rim. In order to mount the tire on the wheel or rim and tension the sidewalls, the beads are seated into the L shaped recesses as bead rings 900 as shown in FIG. 8A. Note that the sidewalls are oriented at a 90 degree angle with respect to the heel or rim surface 910. In order to pretension the sidewall ply, the beads or the wheel or rim surface 1000 are displaced axially outward as shown in FIG. 8B until the desired pretension is reached. The sidewall and sidewall ply are oriented at an angle α, wherein α is in the range of 10 to 50 degrees, and more preferably in the range of 15 to 45 degrees with respect to the wheel or rim surface 1000. The tension of the ply cords ensures that the tire is 100% of a top loader.

As shown in FIG. 8B, the shearband layers remains horizontal after the tire sidewalls are pretensioned, such that the shearband is stiff enough to resist the bending load induced by the sidewall pretension. This is because the shear band is preloaded in compression. FIG. 7 illustrates the ply line of the tire in the relaxed state, superimposed over a phantom view of the ply line in the tensioned position when the sidewalls of the tire are loaded onto the wheel or rim.

The stiffness of each sidewall, and more preferably, the lower half of the sidewall contributes to the top loading of the non-pneumatic tire. The lower half of each sidewall is preferably stiff, and may be stiffened due to a stiff apex, and/or a stiff mass of material located on the axially outer portion such as a chafer or rim flange protector.

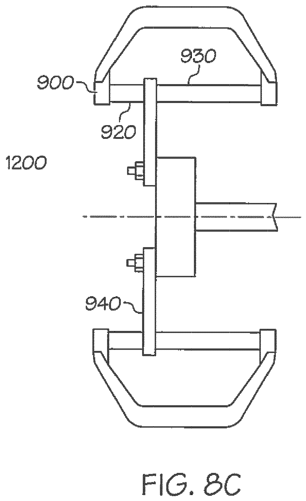

Test tires were built using a conventional tire and were mounted on a split rim or wheel. One example of a modular split rim or wheel assembly 1200 suitable for use with the non-pneumatic tire is shown in FIGS. 8C-8D. The modular split rim or wheel assembly 1200 includes annular bead rings 900 spaced apart by a first axial spacer 920 and a second axial spacer 930 forming an expandible rim or wheel mounting surface 1000. Connected to the rim or wheel mounting surface is an annular mounting flange 940 for connecting to a vehicle hub.

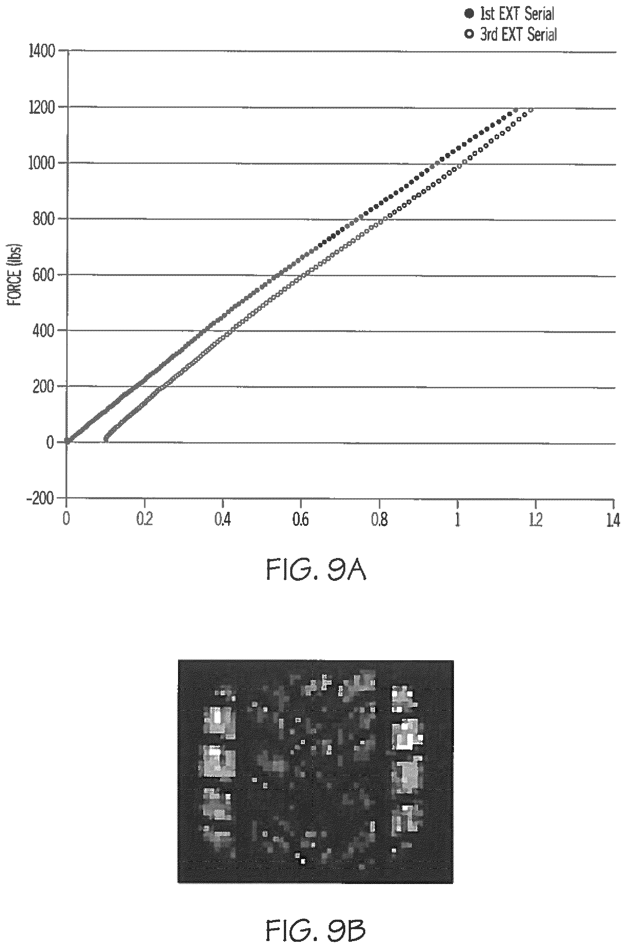

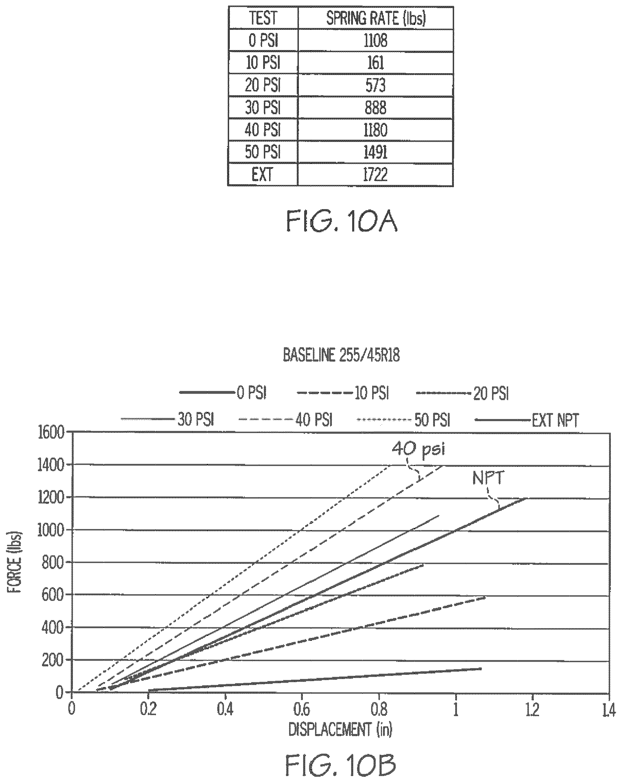

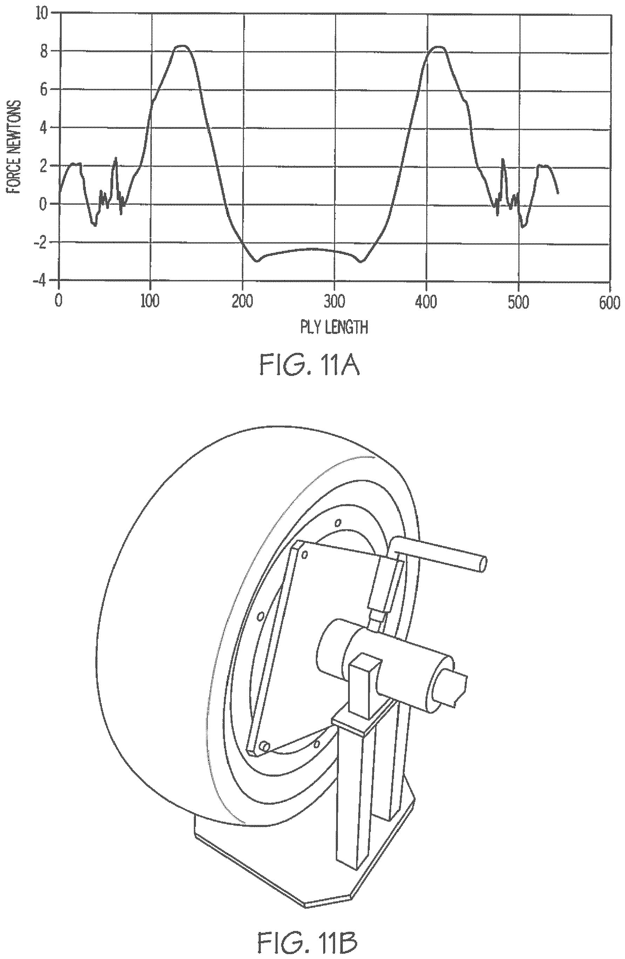

The sidewalls of the tire were pretensioned by axially expanding the beads or by axially expanding the wheel or rim. The test results were as follows. FIG. 9A illustrates a chart of force vs. deflection and FIG. 9B illustrates a footprint. FIG. 10 illustrates the vertical spring rate in comparison with a pneumatic tire of the same size and under different pressures. The NPT tire had a spring rate of 1108 pounds (1 pound = 0.456 kg), while the control tire had a spring rate of 1491 pounds at 40 psi (1 psi = 6895 Pa). FIG. 11A illustrates the cord tension from 0 to 360 degrees of the non-pneumatic tire of the present invention, while FIG. 11B illustrates the device used to measure the cord tension.

## Claims

1. A non-pneumatic tire assembly comprising:
a wheel (50) having a first and second bead ring (900); and
a non-pneumatic tire (100) having a crown region (200) and a first and second sidewall region (400);
wherein the first and second sidewall regions (400) each extend from the crown region (200) and terminate into a first and second bead area (420), wherein the first and second bead area (420) are each mounted on the respective first and second bead ring (900);
wherein each bead area (420) is located axially outward of the crown region (200) of the non-pneumatic tire (100) when mounted on the wheel (50);
and wherein the non-pneumatic tire (100) further includes a ply (500) which extends from the first bead area (420) to the second bead area (420).

2. The non-pneumatic tire assembly of claim 1 wherein the ply (500) includes a plurality of parallel reinforcement cords.

3. The non-pneumatic tire assembly of claim 2 wherein the reinforcement cords are oriented in the radial direction.

4. The non-pneumatic tire assembly of at least one of the previous claims wherein the axial space between the first and second bead rings (900) is axially adjustable.

5. The non-pneumatic tire assembly of at least one of the previous claims wherein the axial space between the first and second bead rings (900) is axially expandable.

6. The non-pneumatic tire assembly of at least one of the previous claims wherein each sidewall region (400) has a double layer of ply (500).

7. The non-pneumatic tire assembly of at least one of the previous claims wherein the ply (500) has a first ply ending (510) and a second ply ending (520), wherein the first and/or the second ply ending (510, 520) are located in or under the crown portion (200) of the tire (100).

8. The non-pneumatic tire assembly of at least one of the previous claims wherein the sidewall regions are angled at an angle α with respect to a horizontal surface of the wheel (50) extending between the radially outermost point of the first and second bead ring (900).

9. The non-pneumatic tire assembly of claim 8 wherein the angle α is in the range of from 10 to 40 degrees.

10. The non-pneumatic tire assembly of at least one of the previous claims wherein each bead area (420) includes an apex (430).

11. The non-pneumatic tire assembly of at least one of the previous claims wherein each sidewall region (400) is preloaded in tension.

12. A non-pneumatic tire assembly comprising:
a rim having a first and second rim flange; and
a non-pneumatic tire (100) having a crown region (200) and a first and second sidewall regions (400);
wherein the first and second sidewall regions (400) each extend from the crown (200) and terminate into a first and second bead area (420);
wherein the first and second bead area (420) are each mounted on the first and second rim flange;
wherein each sidewall portion (400) is preloaded in tension when mounted on the rim; and
wherein the non-pneumatic tire (100) further includes a ply (500), preferably a ply (500) comprising a plurality of parallel reinforcement cords, which extends from the first bead area (420) to the second bead area (420).

13. The non-pneumatic tire assembly of claim 12 wherein a lower sidewall portion has a rib stiffener (700) located axially outward of an apex (430).

14. The non-pneumatic tire assembly of claim 12 or 13 wherein an apex (430) is provided formed of a relatively stiff material having a shear storage modulus G' measured at 1% strain and 100°C according to ASTM D5289 in a range of from 14 to 43 MPa.

15. A non-pneumatic tire assembly comprising:
a rim having a first and second rim flange; and
a non-pneumatic tire (100) having a crown region (200) and a first and second sidewall region (400);
wherein the first and second sidewall regions (400) each extend from the crown (200) and terminate into a first and second bead area (420);
wherein the first and second bead area (420) are each mounted on the first and second rim flange; and
wherein each bead area (420) is located axially outward of the shoulder region (400) of the non-pneumatic tire (100) when mounted on the rim.
